# EUROPEAN PATENT APPLICATION

(11) **EP 3 910 890 A1**
(43) Date of publication of application: **17.11.2021**
(21) Application number: 19909310.5
(22) Date of filing: 11.01.2019
(51) Int. Cl.: H04L 12/70, H04W 40/36, H04W 76/22

(54) **COMMUNICATION MANAGEMENT DEVICE AND DATA MANAGEMENT DEVICE**

(71) Applicant: NTT DOCOMO, INC., Chiyoda-Ku Tokyo 100-6150 (JP)
(72) Inventor: KATSUMATA, Yuki, Tokyo 100-6150 (JP); SAMA, Malla Reddy, 80687 Munich (DE); THAKOLSRI, Srisakul, 80687 Munich (DE)
(74) Representative: Hoffmann Eitle
(86) International application number: PCT/JP2019/000713
(87) International publication number: WO 2020/144856

(57) **Abstract**

A communication management apparatus includes: a receiving unit that receives an identifier transmitted together with a request for network connection from a user equipment; a transmitting unit that transmits identification information of the user equipment to a data management apparatus; and a control unit that selects a predetermined parameter corresponding to the identifier received by the receiving unit as a predetermined parameter corresponding to the network connection from correspondence information between an identifier and a predetermined parameter corresponding to the identification information, the correspondence information being acquired from the data management apparatus.

## Description

### TECHNICAL FIELD

The present invention relates to a communication management apparatus and a data management apparatus in a wireless communication system.

### BACKGROUND ART

In 3rd Generation Partnership Project (3GPP), for example, a wireless communication method called 5G or New Radio (NR) (hereinafter, the wireless communication method is referred to as "5G" or "NR") has been examined in order to further increase system capacity and a data transmission rate and to further reduce delay in a radio section. In 5G, various wireless techniques have been examined in order to satisfy the requirement to achieve a delay of 1 ms or less while achieving a throughput of 10 Gbps or more.

In NR, a network architecture including 5G Core Network (5GC) corresponding to Evolved Packet Core (EPC) which is a core network in a Long Term Evolution (LTE) network architecture and Next Generation-Radio Access Network (NG-RAN) corresponding to Evolved Universal Terrestrial Radio Access Network (E-UTRAN) which is Radio Access Network (RAN) in the LTE network architecture has been examined (for example, Non-Patent Document 1).

In addition, interworking (interconnection) between Evolved Packet System (EPS) and 5G System (5GS) has been examined (for example, Non-Patent Documents 1 and 2). For example, the interworking between EPS and 5GS enables a UE to perform a handover from EPS to 5GS while maintaining Packet Data Network (PDN) connection.

### CITATION LIST

### NON-PATENT DOCUMENT

Non-Patent Document 1: 3GPP TS 23.501 V15.4.0 (2018-12)
Non-Patent Document 2: 3GPP TS 23.502 V15.4.0 (2018-12)
Non-Patent Document 3: 3GPP TS 23.401 V16.1.0 (2018-12)

### SUMMARY OF THE INVENTION

### PROBLEM TO BE SOLVED BY THE INVENTION

In 5GC, the use of a parameter called Network Slice Selection Assistance Information (NSSAI) makes it possible for the network to select a network slice suitable for a service (which may also be referred to as an application) used by the UE.

However, in the configuration according to the related art which performs the interworking between EPS and 5GS, in some cases, it is difficult for the network to appropriately determine the above-mentioned parameter corresponding to the PDN connection. In a case in which it is difficult to appropriately determine the above-mentioned parameter, for example, there is a possibility that a network slice in 5GS will not be appropriately selected in the handover from EPS to 5GS. That is, the technique according to the related art has a problem that the interworking between a plurality of systems may not be appropriately performed.

The invention has been made in view of the above-mentioned problems and an object of the invention is to provide a technique that can appropriately perform interworking between a plurality of systems.

### MEANS FOR SOLVING PROBLEM

According a technique of the present disclosure, there is provided a communication management apparatus including: a receiving unit that receives an identifier transmitted together with a request for network connection from a user equipment; a transmitting unit that transmits identification information of the user equipment to a data management apparatus; and a control unit that selects a predetermined parameter corresponding to the identifier received by the receiving unit as a predetermined parameter corresponding to the network connection from correspondence information between an identifier and a predetermined parameter corresponding to the identification information, the correspondence information being acquired from the data management apparatus.

### EFFECT OF THE INVENTION

According to the technique of the present disclosure, it is possible to provide a technique that can appropriately perform interworking between a plurality of systems.

### BRIEF DESCRIPTION OF DRAWINGS

Fig. 1 is a diagram illustrating the configuration of a system according to an embodiment of the invention;
Fig. 2 is a diagram for describing NSSAI;
Fig. 3 is a diagram illustrating an example of an assumed PDN connection establishment procedure;
Fig. 4 is a diagram illustrating a process in Steps 2 and 6 in Fig. 3;
Fig. 5 is a diagram illustrating an example of a PDN connection establishment procedure in the embodiment of the invention;
Fig. 6 is a diagram illustrating an example of a correspondence table;
Fig. 7 is a diagram illustrating an example of an operation at the time of handover;
Fig. 8 is a diagram illustrating an example of an operation at the time of handover;
Fig. 9 is a diagram illustrating an example of the functional configuration of a communication management apparatus 10 in the embodiment of the invention;
Fig. 10 is a diagram illustrating an example of the functional configuration of a data management apparatus 20 in the embodiment of the invention; and
Fig. 11 is a diagram illustrating an example of the hardware configuration of the communication management apparatus 10 or the data management apparatus 20 in the embodiment of the invention.

### MODE(S) FOR CARRYING OUT THE INVENTION

Hereinafter, an embodiment of the invention will be described with reference to the drawings. The embodiment described below is an example and the embodiment to which the invention is applied is not limited to the following embodiment.

In the operation of a wireless communication system according to the embodiment of the invention, the existing technique is appropriately used. However, the existing technique is, for example, the existing LTE or the existing 5G, but is not limited to the existing LTE or the existing 5G.

In the following description, for example, node names and signal names which are described in the current LTE or 5G specification are used. However, for example, node names and signal names having the same functions as the node names and the signal names may be called names different from the node names and the signal names.

(Example of System Configuration and Outline of Operation)

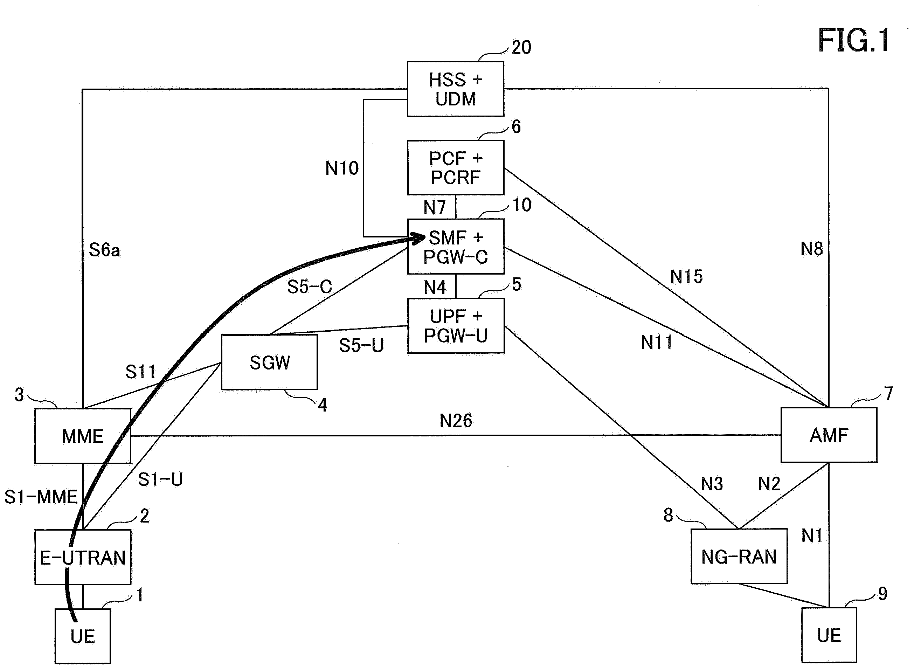

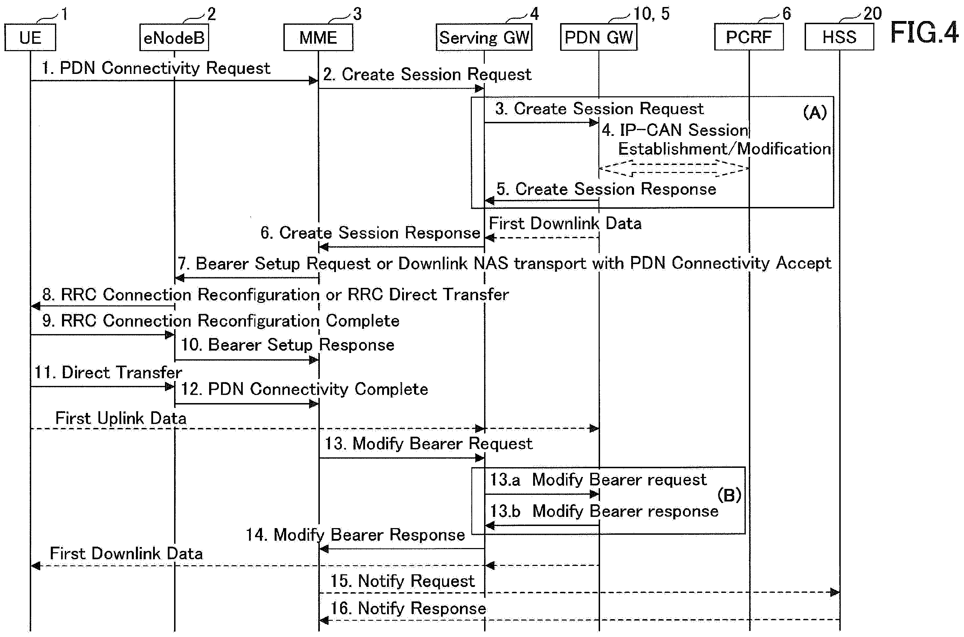

Fig. 1 is a diagram illustrating the configuration of a system according to the embodiment of the invention. Fig. 1 is described as "Figure 4.3.1-1: Non-roaming architecture for interworking between 5GS and EPC/E-UTRAN" in Non-Patent Document 1 (23.501). The system illustrated in Fig. 1 is only an example of the system to which the invention can be applied. The invention can also be applied to systems having configurations other than the configuration of the system illustrated in Fig. 1.

As illustrated in Fig. 1, the system includes a user equipment (UE) 1, an Evolved Universal Terrestrial Radio Access Network (E-UTRAN) 2, a Mobility Management Entity (MME) 3, a Serving Gateway (SGW) 4, a PDN Gateway U-plane+User Plane Function (PGW-U+UPF) 5, a PDN Gateway C-plane+Session Management Function (PGW-C+SMF) 10, a Policy and Charging Rule control Function+Policy Control function (PCRF+PCF) 6, a Home Subscriber Server+Unified Data Management (HSS+UDM) 20, an Access Management Function (AMF) 7, a Next Generation Radio Access Network (NG-RAN) 8, and a UE 9. For example, the apparatuses (also referred to as nodes) are connected through a packet communication network by an interface as illustrated in Fig. 1.

The UEs 1 and 9 are, for example, user equipments such as smart phones. The E-UTRAN 2 is an LTE access network. In addition, the E-UTRAN 2 may be replaced with an eNodeB 2 (a base station in LTE). The MME 3 is a node that performs, for example, mobility control. The SGW 4 is a visited area packet gateway that accommodates a 3GPP access system.

The PGW-U+UPF 5, the PGW-C+SMF 10, the PCRF+PCF 6, and the HSS+UDM 20 are combo nodes in the interworking (interconnection) between EPC and 5GC.

The PGW-U+UPF 5 has the functions of UPF and the functions of PGW-U. The UPF has, for example, a U-plane function that routes and transfers user packets. The PGW-U is a connection point with PDN and is a network obtained by cutting out the U-plane function from a gateway that performs, for example, the assignment of an IP address and the transfer of packets to the SGW.

The PGW-C+SMF 10 has the functions of SMF and the functions of PGW-C. The SMF has a session management function. The PGW-C is a connection point with PDN and is a gateway obtained by cutting out a C plain function from a gateway that performs, for example, the assignment of an IP address and the transfer of packets to the SGW. In addition, the PGW-C+SMF 10 may also be referred to as a communication management apparatus 10.

The PCRF+PCF 6 has the functions of PCF and the functions of PCRF. The PCF retains various policies and provides a C-plane function for executing the policies. The PCRF performs control for QoS and billing in the transfer of user data.

The HSS+UDM 20 has the functions of HSS and the functions of UDM. The HSS is a subscriber information database in the 3GPP mobile communication network and manages authentication information and visitor information. The UDM retains, for example, subscriber information (subscriber contract information). The HSS+UDM 20 may be referred to as a data management apparatus 20.

### (For NSSAI)

In the following description, for example, Single-Network Slice Selection Assistance Information (S-NSSAI) appears. Here, the general matters of NSSAI will be described. The S-NSSAI is a parameter used in 5GC and is associated with a PDU Session ID on a one-to-one basis. The PDU Session corresponds to PDN connection. The network can select a network slice using the parameter. The NSSAI is one S-NSSAI or an aggregate of a plurality of S-NSSAIs.

Configured NSSAI is NSSAI which has been reserved by the standard or NSSAI peculiar to the service provider. Allowed NSSAI is NSSAI that can be used in the current registration area and is notified from the service provider to the UE after the location of the UE is registered.

Requested NSSAI is NSSAI that the UE requests from the service provider at the time of location registration. For example, the Requested NSSAI is determined from the Configured NSSAI at the time of the initial attachment of the UE. The Requested NSSAI is determined from the Allowed NSSAI at the time of periodic location registration.

Subscribed S-NSSAI is S-NSSAI that can be used by the UE on the basis of subscriber information and is notified from the UDM to the AMF.

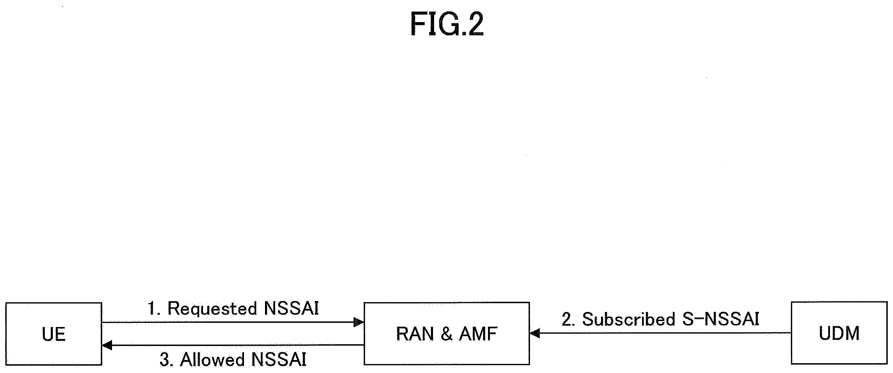

Fig. 2 is a diagram illustrating the above description. The numbers assigned to a sequence illustrated in Fig. 2 indicate step numbers. This holds for the following sequence diagrams. As illustrated in Fig. 2, in a case in which the UE notifies RAN&AMF of Requested NSSAI (Step 1), the RAN&AMF acquires the Subscribed S-NSSAI of the UE from the UDM (Step 2). The RAN&AMF determines Allowed NSSAI from the Requested NSSAI and the Subscribed S-NSSAI and notifies the UE of the determined Allowed NSSAI (Step 3).

### (Outline of Operation of System Related to Problems)

In the configuration illustrated in Fig. 1, the following process is performed in a case in which the UE 1 on the EPC side establishes PDN connection. This process is described in "5.15.7 Network slicing and Interworking with EPS" in Non-Patent Document 1.

The UE 1 assigns a PDU session ID to a service or communication and the PDU session ID is notified to the PGW-C+SMF 10 by PCO. Protocol Configuration Option (PCO) is an option capable of configuring various NW parameters which are also used in EPS. The PGW-C+SMF 10 determines S-NSSAI in association with PDN connection according to the policy of the operator and notifies the UE 1 of the S-NSSAI.

For a method for determining and notifying the S-NSSAI, the PGW-C+SMF 10 determines the S-NSSAI on the basis of a combination of the address of the PGW-C+SMF 10 and APN and notifies the UE 1 of the S-NSSAI together with the related PLMN ID using the PCO. The UE 1 can use the S-NSSAI notified from the EPC at the time of handover to the 5G system.

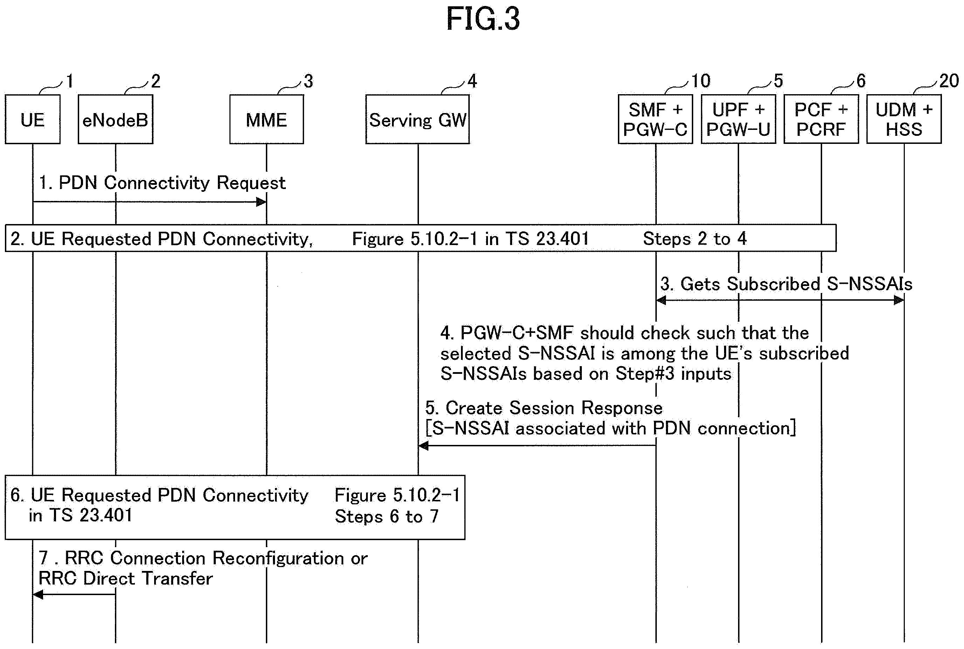

Fig. 3 is a diagram illustrating a PDN connection establishment procedure of the EPC in the system illustrated in Fig. 1 which is assumed from the description of "4.11.0a.5 PDN Connection Establishment" in Non-Patent Document 2.

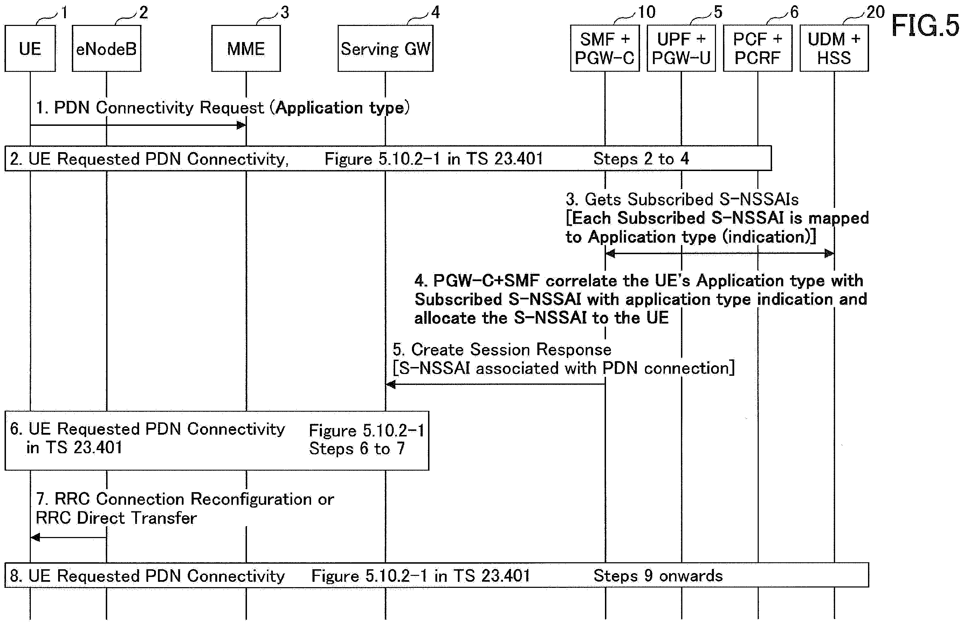

In Step 1, the UE 1 transmits a PDN connection request to the MME 3. In Step 2, the procedure of Step 2 to 4 illustrated in Figure 5.10.2-1 (Fig. 4) in Non-Patent Document 3 is performed.

In Step 3, the PGW-C+SMF 10 acquires the subscribed S-NSSAIs of the UE 1 from the HSS+UDM 20.

In Step 4, the PGW-C+SMF 10 selects S-NSSAI to be notified to the UE 1 from subscribed S-NSSAIs. In Steps 5 to 7, the PGW-C+SMF 10 notifies the UE 1 of PCO including the selected S-NSSAI.

The process in Steps 3 and 4 will be described in detail as follows.

The PGW-C+SMF 10 acquires subscribed S-NSSAIs from the HSS+UDM 20 using a Nudm_SDM_Get service operation (one of the procedures of "PGW-C+SMF discovers and selects a UDM" defined in 6.3.8 of Non-Patent Document 1) (Step 3).

In Step 4, the PGW-C+SMF 10 checks that the selected S-NSSAI (for example, S-NSSAI which corresponds to the APN of the PDN connection request from the UE 1 and is supported by the PGW-C+SMF 10) is included in the subscribed S-NSSAIs of the UE 1.

In a case in which the UE 1 is connected to PGW-C+SMF in VPLMN, the PGW-C+SMF maps the subscribed S-NSSAI to the value of S-NSSAI of HPLMN using a Nnssf_NSSelection_Get service operation.

### (For Problems)

In the techniques disclosed in Non-Patent Documents 1 and 2, in a case in which the PGW-C+SMF 10 supports a plurality of S-NSSAIs and a plurality of S-NSSAIs correspond to one APN, when the UE 1 supports a plurality of subscribed S-NSSAIs (has the subscribed S-NSSAIs as subscriber information), there is a problem that it is difficult for the PGW-C+SMF 10 to uniquely determine which S-NSSAI corresponds to the PDN connection established by the UE 1.

For example, a case in which the UE 1 transmits a PDN connection request to APN-A is considered. It is assumed that the PGW-C+SMF 10 supports S-NSSAI_1, S-NSSAI_2, and S-NSSAI_3 and S-NSSAI_1, S-NSSAI_2, and S-NSSAI_3 correspond to APN-A.

In this case, assuming that the subscribed S-NSSAIs of the UE 1 are S-NSSAI_1, S-NSSAI_2, and S-NSSAI_3, it is difficult for the PGW-C+SMF 10 to specify one of S-NSSAI_1, S-NSSAI_2, and S-NSSAI_3 as S-NSSAI assigned to the UE 1. When the UE 1 arbitrarily selects one of S-NSSAI_1, S-NSSAI_2, and S-NSSAI_3, there is a possibility that the UE 1 will not be connected to an appropriate network slice in 5GC at the time of handover from EPS to 5GS.

### (Process Procedure for Solving Problems)

A process procedure for solving the problems will be described with reference to Fig. 5.

In Step 1, the UE 1 transmits a PDN connection request to the MME 3. The PDN connection request includes, for example, an APN and a PDU session ID. In addition, the PDN connection request includes an application type ID.

Specifically, the UE 1 includes the PDU session ID and the application type ID (for example: an ID indicating V2X or enterprise#2 app) of the UE 1 in PCO of the PDN connection request. In addition, the application type ID indicates the type of application to which the UE 1 wants to be connected and is associated with S-NSSAI on a one-to-one basis.

However, the configuration in which the application type ID is included in the PDN connection request is only an example. Instead of the application type ID, an "identifier associated with the application type ID in the PGW-C+SMF 10" may be included in the PDN connection request. It is assumed that the application type ID is an example of the "identifier associated with the application type ID in the PGW-C+SMF 10".

In Step 2, the procedure of Steps 2 to 4 illustrated in Figure 5.10.2-1 (Fig. 4) in Non-Patent Document 3 is performed. The use of the procedure of Steps 2 to 4 illustrated in Figure 5.10.2-1 (Fig. 4) in Non-Patent Document 3 is an example. Any procedure may be used as long as it can establish the PDN connection. At least the APN, the subscriber identification information, and the application type ID are notified to the PGW-C+SMF 10 by the procedure of Steps 2 to 4 illustrated in Figure 5.10.2-1 (Fig. 4) in Non-Patent Document 3.

In a process in Steps 3 and 4 illustrated in Fig. 3, the PGW-C+SMF 10 selects S-NSSAI that is in one-to-one correspondence with the PDN connection established by the UE 1 and assigns the selected S-NSSAI to the UE 1. The process in Steps 3 and 4 will be described in detail below. In Steps 5 to 7, the PGW-C+SMF 10 includes the selected S-NSSAI in PCO and notifies the UE 1 of the PCO.

### (Details of Process in Steps 3 and 4)

There are options 1 to 3 for the process in Steps 3 and 4. For example, Fig. 5 illustrates the option 1. Hereinafter, the options 1 to 3 will be described. In the options 2 and 3, for convenience, "Step 3" (mainly the process between the PGW-C+SMF 10 and the HSS+UDM 20) and "Step 4" (the process of the PGW-C+SMF 10) are also used.

In any one of the options 1 to 3, the HSS+UDM 20 retains the information of one subscribed S-NSSAI or a plurality of subscribed S-NSSAIs, which can be used by the subscriber, for each subscriber (specifically, for example, for each of the identification information items of UEs). In addition, the identification information of the UE may be also referred to as subscriber identification information.

In any one of the options 1 to 3, for example, the PGW-C+SMF 10 retains the information of one subscribed S-NSSAI or a plurality of subscribed S-NSSAIs, which correspond to the APN, for each APN. In addition, for example, the HSS+UDM 20 may retain the information of one S-NSSAI or a plurality of S-NSSAIs, which correspond to the APN, for each APN and the PGW-C+SMF 10 may acquire S-NSSAI corresponding to the APN of the connection destination of the UE from the HSS+UDM 20 if necessary.

### <Option 1>

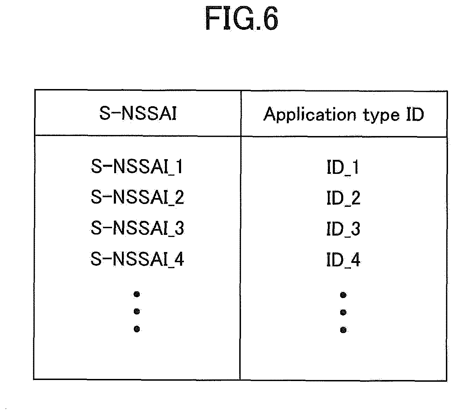

In the option 1, the HSS+UDM 20 retains a correspondence table in which S-NSSAI and an application type ID are associated with each other. An example of the correspondence table is illustrated in Fig. 6.

First, Step 3 will be described. The PGW-C+SMF 10 transmits the subscriber identification information of the UE 1 included in the PDN connection request to the HSS+UDM 20. The HSS+UDM 20 acquires one subscribed S-NSSAI or a plurality of subscribed S-NSSAIs corresponding to the subscriber identification information of the UE 1 and acquires an application type ID corresponding to the one subscribed S-NSSAI or each of the plurality of subscribed S-NSSAIs from the correspondence table.

The HSS+UDM 20 may retain a correspondence table for the subscribed S-NSSAI corresponding to the subscriber identification information for each subscriber identification information item. In this case, the HSS+UDM 20 acquires the correspondence information between the subscribed S-NSSAI and the application type ID with reference to the correspondence table corresponding to the subscriber identification information of the UE 1.

Then, the HSS+UDM 20 transmits a list having one subscribed S-NSSAI or a plurality of subscribed S-NSSAIs and the application type IDs corresponding to each subscribed S-NSSAI to the PGW-C+SMF 10. In a case in which the list is based on the information illustrated in Fig. 6, for example, the list is information such as "(S-NSSAI_1, ID_1) and (S-NSSAI_2, ID_2)".

Next, Step 4 will be described. The PGW-C+SMF 10 acquires one S-NSSAI corresponding to the application type ID included in the PDN connection request from the list received from the HSS+UDM 20 in Step 3. For example, assuming that the application type ID included in the PDN connection request is ID_1, S-NSSAI_1 is acquired from the list.

When it is checked that the S-NSSAI acquired from the list corresponds to the APN included in the PDN connection request, the PGW-C+SMF 10 determines the S-NSSAI is the subscribed S-NSSAI assigned to the UE 1 (corresponds to the PDN connection (network connection) of the UE 1). In addition, the PGW-C+SMF 10 retains the determined subscribed S-NSSAI as the S-NSSAI corresponding to the PDN connection of the UE 1.

In a case in which all of the S-NSSAIs supported by the PGW-C+SMF 10 certainly correspond to the APN included in the PDN connection request, the process of checking whether the S-NSSAI obtained from the list corresponds to the APN included in the PDN connection request may not be performed.

### <Option 2>

In the option 2, the HSS+UDM 20 also retains a correspondence table (for example: Fig. 6) in which S-NSSAIs and application type IDs are associated with each other.

In Step 3, the PGW-C+SMF 10 transmits the application type ID included in the PDN connection request to the HSS+UDM 20 and the HSS+UDM 20 acquires S-NSSAI corresponding to the application type ID from the correspondence table and transmits the S-NSSAI to the PGW-C+SMF 10.

Therefore, the PGW-C+SMF 10 can acquire one S-NSSAI corresponding to the application type ID in the PDN connection of the UE 1.

In addition, the application type ID used by the UE 1 may be determined such that the S-NSSAI corresponding to the application type ID transmitted from the UE 1 is certainly the subscribed S-NSSAI corresponding to the subscriber identification information of the UE 1. For example, the PGW-C+SMF 10 may check whether the S-NSSAI corresponding to the application type ID transmitted from the UE 1 is the subscribed S-NSSAI corresponding to the subscriber identification information of the UE 1.

In Step 4, when it is checked that the S-NSSAI received from the HSS+UDM 20 corresponds to the APN included in the PDN connection request, the PGW-C+SMF 10 determines that the S-NSSAI is the subscribed S-NSSAI assigned to the UE 1. In addition, the PGW-C+SMF 10 retains the determined subscribed S-NSSAI as the S-NSSAI corresponding to the PDN connection of the UE 1.

In a case in which all of the S-NSSAIs supported by the PGW-C+SMF 10 certainly correspond to the APN included in the PDN connection request, the process of checking whether the S-NSSAI received from the HSS+UDM 20 corresponds to the APN included in the PDN connection request may not be performed.

### <Option 3>

In the option 3, the PGW-C+SMF 10 retains the correspondence table (Fig. 6) in which S-NSSAIs and application type IDs are associated with each other.

In Step 3, the PGW-C+SMF 10 transmits the subscriber identification information of the UE 1 included in the PDN connection request to the HSS+UDM 20. The HSS+UDM 20 acquires one subscribed S-NSSAI or a plurality of subscribed S-NSSAIs corresponding to the subscriber identification information of the UE 1 and transmits the one subscribed S-NSSAI or the plurality of subscribed S-NSSAIs to the PGW-C+SMF 10.

In Step 4, the PGW-C+SMF 10 detects the same application type ID as that included in the PDN connection request among the application type IDs corresponding to the one subscribed S-NSSAI or each of the plurality of subscribed S-NSSAIs received from the HSS+UDM 20 with reference to the correspondence table and acquires S-NSSAI corresponding to the detected application type ID.

When it is checked that the S-NSSAI corresponding to the application type ID corresponds to the APN included in the PDN connection request, the PGW-C+SMF 10 determines that the S-NSSAI is the subscribed S-NSSAI assigned to the UE 1. In addition, the PGW-C+SMF 10 retains the determined subscribed S-NSSAI as the S-NSSAI corresponding to the PDN connection of the UE 1.

In a case in which all of the S-NSSAIs supported by the PGW-C+SMF 10 certainly correspond to the APN included in the PDN connection request, the process of checking whether the S-NSSAI acquired from the list corresponds to the APN included in the PDN connection request may not be performed.

In the method according to any one of the options 1 to 3, the PGW-C+SMF 10 can correctly select one S-NSSAI that is in one-to-one correspondence with the PDN connection of the UE 1.

### (For Handover)

As described above, since the PGW-C+SMF 10 can correctly select one S-NSSAI corresponding to the PDN connection of the UE 1, it is possible to appropriately perform handover from EPS to 5GS described in, for example, "4.11.1.2.2 EPS to 5GS handover using N26 interface" of Non-Patent Document 2.

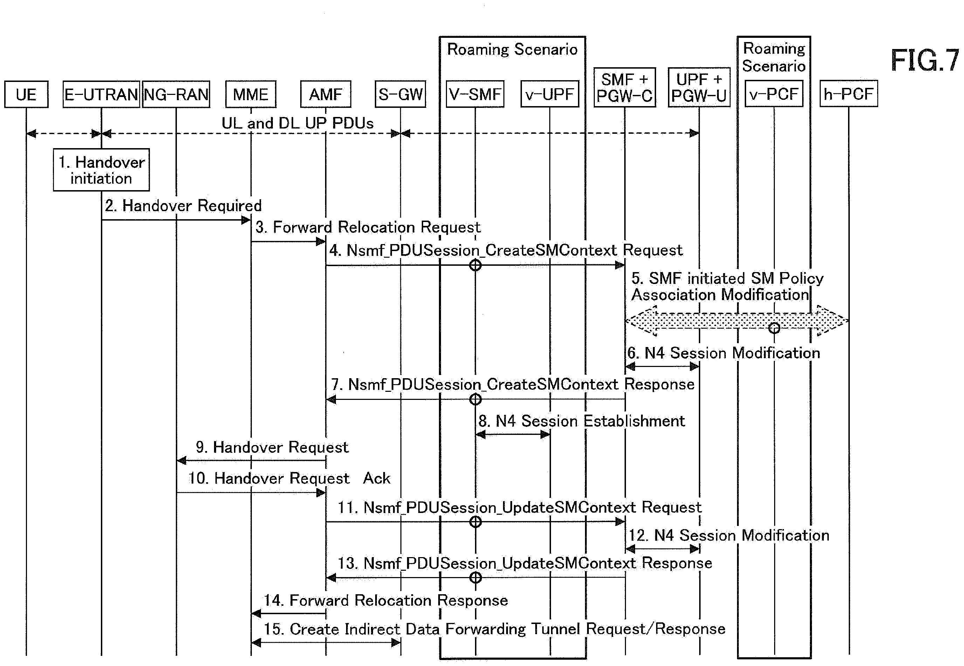

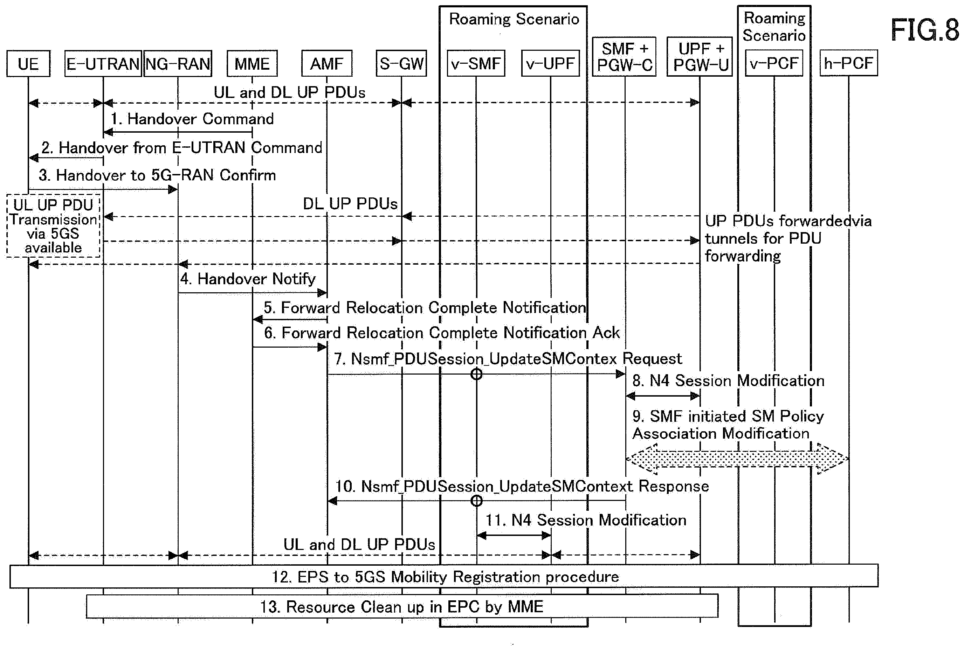

That is, the handover from EPS to 5GS can be appropriately performed by the procedures illustrated in Fig. 7 (Figure 4.11.1.2.2.2-1: EPS to 5GS handover using N26 interface, preparation phase in Non-Patent Document 2) and Fig. 8 (Figure 4.11.1.2.2.3-1: EPS to 5GS handover using N26 interface, execution phase).

The procedure described in "4.11.1.2.2 EPS to 5GS handover using N26 interface" of Non-Patent Document 2 is an example. The invention can also be applied to procedures other than the procedure described in "4.11.1.2.2 EPS to 5GS handover using N26 interface" of Non-Patent Document 2.

### (Apparatus Configuration)

Next, an example of the functional configuration of the communication management apparatus 10 corresponding to the PGW-C+SMF 10 and the data management apparatus 20 corresponding to the HSS+UDM 20 which perform the above-mentioned processes and operations will be described. The communication management apparatus 10 and the data management apparatus 20 have the function of performing the above-mentioned options 1 to 3. However, each of the communication management apparatus 10 and the data management apparatus 20 may have only some of the functions of the options 1 to 3.

### <Communication Management Apparatus 10>

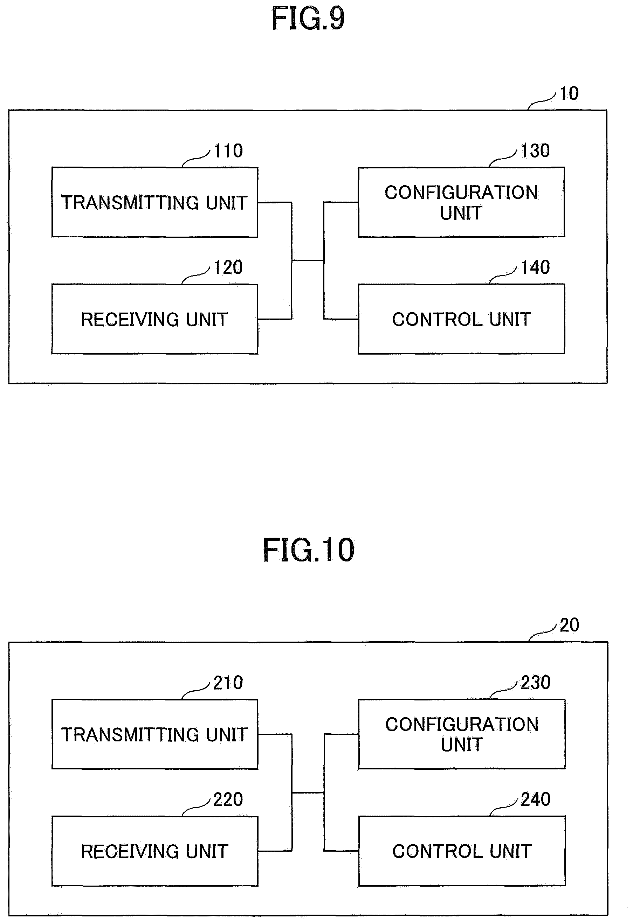

Fig. 9 is a diagram illustrating an example of the functional configuration of the communication management apparatus 10. As illustrated in Fig. 9, the communication management apparatus 10 includes a transmitting unit 110, a receiving unit 120, a configuration unit 130, and a control unit 140. The functional configuration illustrated in Fig. 9 is only an example. The functional units may have any functions and any names as long as they can perform the operations according to the embodiment of the invention.

The transmitting unit 110 has a function that generates a signal to be transmitted and transmits the signal to the network. The receiving unit 120 has a function that receives various signals and acquires, for example, the information of an upper layer from the received signals. The transmitting unit 110 and the receiving unit 120 may be referred to as a transmitter and a receiver, respectively.

The configuration unit 130 stores configuration information in a storage device (storage unit) and reads the configuration information from the storage device if necessary. The content of the configuration information includes, for example, a correspondence table in which S-NSSAIs and application type IDs are associated with each other and a table in which APNs and S-NSSAIs are associated with each other.

The control unit 140 performs, for example, the process of the PGW-C+SMF 10 determining S-NSSAI described in the options 1 to 3. A functional unit related to the transmission of signals in the control unit 140 may be included in the transmitting unit 110 and a functional unit related to the reception of signals in the control unit 140 may be included in the receiving unit 120.

### <Data Management Apparatus 20>

Fig. 10 is a diagram illustrating an example of the functional configuration of the data management apparatus 20. As illustrated in Fig. 10, the data management apparatus 20 includes a transmitting unit 210, a receiving unit 220, a configuration unit 230, and a control unit 240. The functional configuration illustrated in Fig. 10 is only an example. The functional units may have any functions and any names as long as they can perform the operations according to the embodiment of the invention.

The transmitting unit 210 has a function that generates a signal to be transmitted and transmits the signal to the network. The receiving unit 220 has a function that receives various signals and acquires, for example, the information of an upper layer from the received signals. The transmitting unit 110 and the receiving unit 120 may be referred to as a transmitter and a receiver, respectively.

The configuration unit 230 stores configuration information in the storage device (storage unit) and reads the configuration information from the storage device if necessary. The content of the configuration information includes, for example, a correspondence table in which S-NSSAIs and application type IDs are associated with each other and a table in which subscriber identification information and subscribed S-NSSAIs are associated with each other.

The control unit 240 performs, for example, the process of the HSS+UDM 20 described in the options 1 to 3. A functional unit related to the transmission of signals in the control unit 240 may be included in the transmitting unit 210 and a functional unit related to the reception of signals in the control unit 240 may be included in the receiving unit 220.

### (Hardware Configuration)

The block diagrams (Fig. 9 and Fig. 10) used in the description of the above-mentioned embodiment illustrate the blocks of the function units. The functional blocks (configuration units) are implemented by at least one of any combinations of hardware and software. A method for implementing each functional block is not particularly limited. That is, each functional block may be implemented by using one apparatus that is physically or logically coupled or by connecting two or more apparatuses which are physically or logically separated from each other directly or indirectly (for example, wirelessly or in a wired manner) and using the plurality of apparatuses. The functional blocks may be implemented by combining software with the one apparatus or the plurality of apparatuses.

The functions include judgment, decision, determination, computation, calculation, processing, derivation, investigation, search, confirmation, reception, transmission, output, access, resolution, selection, choice, establishment, comparison, assumption, expectation, consideration, broadcasting, notifying, communicating, forwarding, configuring, reconfiguring, allocating, mapping, and assigning. However, the functions are not limited thereto. For example, a functional block (configuration unit) having a transmission function is referred to as a transmitting unit or a transmitter. In any case, as described above, a method for implementing the functional block is not particularly limited.

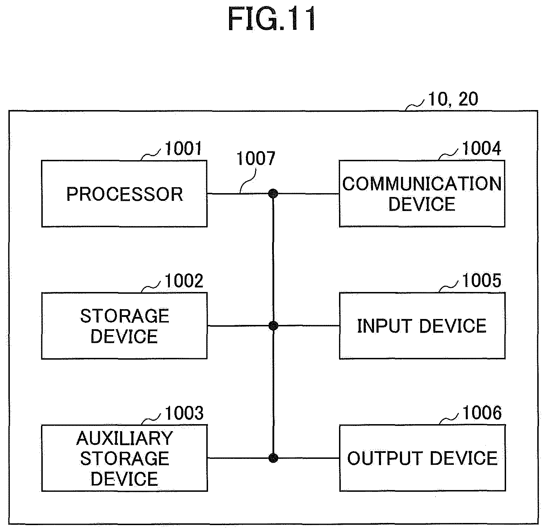

For example, the communication management apparatus 10 and the data management apparatus 20 according to the embodiment of the present disclosure may function as a computer that performs the processes of a wireless communication method according to the present disclosure. Fig. 11 is a diagram illustrating an example of the hardware configuration of the communication management apparatus 10 and the data management apparatus 20 according to the embodiment of the present disclosure. The communication management apparatus 10 and the data management apparatus 20 may be physically configured as a computer apparatus that includes, for example, a processor 1001, a storage device 1002, an auxiliary storage device 1003, a communication device 1004, an input device 1005, an output device 1006, and a bus 1007. Each of the communication management apparatus 10 and the data management apparatus 20 may be a virtual machine.

In the following description, the term "apparatus" can be replaced with, for example, a circuit, a device, or a unit. The hardware configuration of the communication management apparatus 10 and the data management apparatus 20 may be configured to include one or more of the devices illustrated in Fig. 11 or may be configured not to include some of the devices.

Each of the functions of the communication management apparatus 10 and the data management apparatus 20 is implemented by loading predetermined software (program) onto hardware, such as the processor 1001 and the storage device 1002, and causing the processor 1001 to perform an operation to control communication by the communication device 1004 or to control at least one of the reading and writing of data from and to the storage device 1002 and the auxiliary storage device 1003.

For example, the processor 1001 operates an operating system to control the entire computer. The processor 1001 may be a central processing unit (CPU) including, for example, an interface with peripheral devices, a control device, an arithmetic device, and a register. For example, the control unit 140 and the control unit 240 may be implemented by the processor 1001.

The processor 1001 reads, for example, a program (program code), a software module, or data from at least one of the auxiliary storage device 1003 and the communication device 1004 to the storage device 1002 and performs various processes according to the read program, software module, or data. As the program, a program that causes the computer to perform at least some of the operations described in the above-mentioned embodiment is used. For example, the control unit 140 of the communication management apparatus 10 illustrated in Fig. 9 may be implemented by a control program that is stored in the storage device 1002 and is operated by the processor 1001. In addition, for example, the control unit 240 of the data management apparatus 20 illustrated in Fig. 10 may be implemented by a control program that is stored in the storage device 1002 and is operated by the processor 1001. In the above description, the various processes are performed by one processor 1001. However, the various processes may be performed sequentially or at the same time by two or more processors 1001. The processor 1001 may be configured by one or more chips. The program may be transmitted from the network through a telecommunication line.

The storage device 1002 is a computer-readable recording medium and may be configured by, for example, at least one of a read only memory (ROM), an erasable programmable ROM (EPROM), an electrically erasable programmable ROM (EEPROM), and a random access memory (RAM). The storage device 1002 may be referred to as, for example, a register, a cache, or a main memory (main storage device). The storage device 1002 can store, for example, an executable program (program code) or a software module for performing a communication method according to the embodiment of the present disclosure.

The auxiliary storage device 1003 is a computer-readable recording medium and may be configured by, for example, at least one of as an optical disc, such as a compact disc ROM (CD-ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a Floppy (registered trademark) disk, and a magnetic strip. The above-mentioned storage medium may be, for example, a database, a server, or other suitable media including at least one of the storage device 1002 and the auxiliary storage device 1003.

The communication device 1004 is hardware (transmitting and receiving device) for communication between computers through at least one of a wired network and a wireless network and is referred to as, for example, a network device, a network controller, a network card, or a communication module. The communication device 1004 may include, for example, a high-frequency switch, a duplexer, a filter, and a frequency synthesizer in order to implement at least one of frequency division duplex (FDD) and time division duplex (TDD). For example, a transmitting and receiving antenna, an amplifier unit, a transmitting and receiving unit, and a transmission path interface may be implemented by the communication device 1004. The transmitting and receiving unit may be configured such that a transmitting unit and a receiving unit are physically or logically separated from each other.

The input device 1005 is an input device (for example, a keyboard, a mouse, a microphone, a switch, a button, or a sensor) that receives an input from the outside. The output device 1006 is an output device (for example, a display, a speaker, or an LED lamp) that performs output to the outside. The input device 1005 and the output device 1006 may be integrated (for example, a touch panel).

The devices, such as the processor 1001 and the storage device 1002, are connected to each other by the bus 1007 for information communication. The bus 1007 may be configured by a single bus or may be configured by different buses between the devices.

The communication management apparatus 10 and the data management apparatus 20 may include hardware, such as a microprocessor, a digital signal processor (DSP), an application specific integrated circuit (ASIC), a programmable logic device (PLD), and a field programmable gate array (FPGA) and some or all of the functional blocks may be implemented by the hardware. For example, the processor 1001 may be configured by using at least one of the hardware components.

### (Summary of Embodiment)

For example, the communication management apparatus and the data management apparatus according to this embodiment are configured as described in the following first to six items.

### (First Item)

A communication management apparatus 10 including:
a receiving unit 120 that receives an identifier transmitted together with a request for network connection from a user equipment;
a transmitting unit 110 that transmits identification information of the user equipment to a data management apparatus; and
a control unit 140 that selects a predetermined parameter corresponding to the identifier received by the receiving unit as a predetermined parameter corresponding to the network connection from correspondence information between an identifier and a predetermined parameter corresponding to the identification information, the correspondence information being acquired from the data management apparatus.

### (Second Item)

A communication management apparatus 10 including:
a receiving unit 120 that receives an identifier transmitted together with a request for network connection from a user equipment;
a transmitting unit 110 that transmits the identifier to a data management apparatus; and
a control unit 140 that determines a predetermined parameter corresponding to the identifier which is acquired from the data management apparatus as a predetermined parameter corresponding to the network connection.

### (Third Item)

A communication management apparatus 10 including:
a receiving unit 120 that receives an identifier transmitted together with a request for network connection from a user equipment; and
a control unit 140 that selects a predetermined parameter which corresponds to the identifier received by the receiving unit and is supported by the user equipment as a predetermined parameter corresponding to the network connection from correspondence information between an identifier and a predetermined parameter.

### (Fourth Item)

The communication management apparatus according to any one of the first to third items,
wherein the identifier is an identifier associated with an application type and the predetermined parameter is network slice selection assistance information.

### (Fifth Item)

A data management apparatus 20 including:
a receiving unit 220 that receives identification information of a user equipment from a communication management apparatus which receives an identifier transmitted together with a request for network connection from the user equipment; and
a transmitting unit 210 that transmits correspondence information between an identifier and a predetermined parameter corresponding to the identification information to the communication management apparatus.

### (Sixth Item)

A data management apparatus 20 including:
a receiving unit 220 that receives an identifier from a communication management apparatus which receives the identifier transmitted together with a request for network connection from a user equipment;
a control unit 240 that acquires a predetermined parameter corresponding to the identifier received by the receiving unit from correspondence information between an identifier and a predetermined parameter; and
a transmitting unit 210 that transmits the predetermined parameter to the communication management apparatus.

According to the configuration described in the first, second, third, fifth, and sixth items, a technique that can appropriately perform interworking between a plurality of systems is provided.

According to the configuration described in the fourth item, the network can appropriately select a network slice suitable for an application used by the user equipment.

### (Supplement of Embodiment)

The embodiment of the invention has been described above. However, the disclosed invention is not limited to the embodiment. Those skilled in the art can understand various modifications, corrections, substitutions, replacements, and the like. The description has been made using specific numerical examples in order to facilitate the understanding of the invention. These numerical values are merely examples and any appropriate values may be used unless otherwise stated. The classification of the items in the above description is not essential, but matters described in two or more items may be combined and used if necessary or matters described in a certain item may be applied to matters described in other items (unless the matters are inconsistent). The boundaries of the functional units or the processing units in the functional block diagrams may not necessarily correspond to the boundaries of physical components. The operations of the plurality of functional units may be performed physically by one component or the operation of one functional unit may be performed physically by a plurality of components. For the process procedures described in the embodiment, the order of the processes may be switched without being inconsistent. In order to facilitate the description of the processes, the communication management apparatus 10 and the data management apparatus 20 have been described with reference to the functional block diagrams. However, the apparatuses may be implemented by hardware, software, or a combination thereof. Each of software operated by the processor included in the communication management apparatus 10 according to the embodiment of the invention and software operated by the processor included in the data management apparatus 20 according to the embodiment of the invention may be stored in a random access memory (RAM), a flash memory, a read-only memory (ROM), an EPROM, an EEPROM, a register, a hard disk drive (HDD), a removable disk, a CD-ROM, a database, a server, or other appropriate storage media.

The notification of information is not limited to the aspect/embodiment described in the present disclosure and may be performed by other methods. For example, the notification of information may be performed by physical layer signaling (for example, downlink control information (DCI) or uplink control information (UCI)), higher layer signaling (for example, radio resource control (RRC) signaling, medium access control (MAC) signaling, or broadcast information (a master information block (MIB) or a system information block (SIB)), other types of signaling, or a combination thereof. The RRC signaling may also be referred to as an RRC message. For example, the RRC signaling may be an RRC connection setup message or an RRC connection reconfiguration message.

Each aspect/embodiment described in the present disclosure may be applied to at least one of systems using Long Term Evolution (LTE), LTE-Advanced (LTE-A), SUPER 3G, IMT-Advanced, a 4th generation mobile communication system (4G), a 5th generation mobile communication system (5G), Future Radio Access (FRA), new Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems and next-generation systems extended on the basis of these systems. In addition, a plurality of systems may be combined (for example, a combination of at least one of LTE and LTE-A and 5G) and then applied.

For example, the order of the process procedures, the sequence, and the flowchart in each aspect/embodiment described in the specification may be interchanged as long as there is no contradiction. For example, in the method described in the present disclosure, elements of various steps are presented using an exemplary order and the invention is not limited to the presented specific order.

In the specification, a specific operation performed by the communication management apparatus 10 may also be performed by an upper node according to circumstances. In a network including one network node or a plurality of network nodes having the communication management apparatus 10, it is clear that various operations performed to communicate with the data management apparatus 20 can be performed by the communication management apparatus 10 and at least one of network nodes other than the communication management apparatus 10. The case in which the number of network nodes other than the communication management apparatus 10 is 1 has been exemplified above. However, other network nodes may be combinations of a plurality of other network nodes.

For example, the information and the signals described in the present disclosure can be output from a higher layer (or a lower layer) to a lower layer (or a higher layer). The information and the signals may be input or output through a plurality of network nodes.

For example, the input or output information may be stored in a specific location (for example, a memory) or may be managed using a management table. For example, the input or output information may be overwritten, updated, or edited. For example, the output information may be deleted. For example, the input information may be transmitted to other apparatuses.

The determination described in the present disclosure may be performed with a value (0 or 1) represented by 1 bit, may be performed by a true or false value (Boolean: true or false), or may be performed by comparison with a numerical value (for example, comparison with a predetermined value).

Of course, regardless of whether software is referred to as software, firmware, middleware, a microcode, or a hardware description language or is referred to as other names, the software needs be interpreted broadly to mean, for example, a command, a command set, a code, a code segment, a program code, a program, a sub-program, a software module, an application, a software application, a software package, a routine, a subroutine, an object, an executable file, an execution thread, a procedure, and a function.

In addition, for example, software, a command, and information may be transmitted or received through a transmission medium. For example, in a case in which software is transmitted from a website, a server, or other remote sources by at least one of a wired technology (for example, a coaxial cable, an optical fiber cable, a twisted pair, or a digital subscriber line (DSL)) and a wireless technology (for example, infrared rays or microwaves), at least one of the wired technology and the wireless technology is included in the definition of a transmission medium.

For example, the information and the signals described in the present disclosure may be represented by any of various other techniques. For example, the data, the order, the command, the information, the signal, the bit, the symbol, and the chip mentioned throughout the above description may be represented by a voltage, a current, an electromagnetic wave, a magnetic field or a magnetic particle, an optical field or a photon, or any combination thereof.

The terms described in the present disclosure and/or the terms necessary to understand the present disclosure may be replaced with terms that have the same or similar meanings. For example, at least one of a channel and a symbol may be a signal (signaling). In addition, a signal may be a message. Further, a component carrier (CC) may be referred to as, for example, a carrier frequency, a cell, or a frequency carrier.

The terms "system" and "network" used in the present disclosure are compatibly used.

For example, the information and the parameter described in the present disclosure may be represented by an absolute value, may be represented by a relative value from a predetermined value, or may be represented by another piece of corresponding information. For example, a radio resource may be instructed by an index.

The names used for the above-mentioned parameters are not limited in any respect. Further, for example, a numerical expression using the parameters may be different from the numerical expression described explicitly in the present disclosure. Since various channels (for example, PUCCH and PDCCH) and information elements can be identified by appropriate names, various names assigned to the various channels and information elements are not limited in any respect.

In the present disclosure, for example, the terms "base station (BS)", "radio base station", "base station apparatus", "fixed station", "NodeB", "eNodeB (eNB)", "gNodeB (gNB)", "access point", "transmission point", "reception point", "transmission/reception", "cell", "sector", "cell group", "carrier", and "component carrier" can be compatibly used. The base station may also be referred to as, for example, a macro cell, a small cell, a femto cell, or a pico cell.

The base station can accommodate one cell or a plurality (for example, three) of cells. In a case in which the base station accommodates a plurality of cells, the entire coverage area of the base station can be divided into a plurality of small areas and each of the small areas can also provide a communication service using a base station subsystem (for example, an indoor small-sized base station (remote radio head (RRH)). The term "cell" or "sector" refers to a part or all of the coverage area of at least one of the base station and the base station subsystem that provide a communication service in the coverage.

In the present disclosure, for example, the terms "mobile station (MS)", "user terminal", "user equipment (UE)", and "terminal" can be compatibly used.

The mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal," a "mobile terminal", a "wireless terminal", a "remote terminal", a "handset", a "user agent", a "mobile client", a "client", or some other suitable terms, depending on the person skilled in the art.

At least one of the base station and the mobile station may be referred to as, for example, a transmitting device, a receiving device, or a communication device. In addition, at least one of the base station and the mobile station may be a moving body or a device provided in the moving body. The moving body may be a vehicle (for example, a car or an airplane), an unmanned moving body (for example, a drone or an autonomous driving vehicle), or a robot (a manned type or an unmanned type). Further, at least one of the base station and the mobile station includes a device that does not necessarily move during a communication operation. For example, at least one of the base station and the mobile station may be an Internet of Things (IoT) device such as a sensor.

The term "determining" used in the present disclosure includes a wide variety of operations in some cases. The "determining" can include cases in which performing, for example, judging, calculating, computing, processing, deriving, investigating, looking up, search, or inquiry (for example, looking up in a table, a database, or other data structures), and ascertaining is considered to perform "determining". In addition, the "determining" can include cases in which performing, for example, receiving (for example, receiving information), transmitting (for example, transmitting information), inputting, outputting, and accessing (for example, accessing data in a memory) is considered to perform "determining". Further, the "determining" can include cases in which performing, for example, resolving, selecting, choosing, establishing, and comparing is considered to be perform "determining". That is, the "determining" can include a case in which any operation is considered to perform "determining". Furthermore, the "determining" may be replaced with, for example, "assuming", "expecting", or "considering".

The terms "connected" and "coupled" or all modifications of the terms mean all direct or indirect connection or coupling between two or more elements and can include the presence of one or more intermediate elements between two mutually "connected" or "coupled" elements. The connection or coupling between elements may be physical connection, logical connection, or any combination thereof. For example, the "connection" may be replaced with "access". In a case in which the connection or the coupling is used in the present disclosure, two elements can be considered to be mutually "connected" or "coupled" by using at least one of one or more electric wires, cables, and printed electric connection and by using electromagnetic energy with wavelengths in a radio frequency domain, a microwave domain, and an optical (both visible and invisible) domain as several non-limited and non-inclusive examples.

A reference signal can also be abbreviated to RS (reference signal) and may also be referred to as a pilot according to the standard to be applied.

The term "based on" used in the present disclosure does not mean "based on only" unless otherwise stated. In other words, the term "based on" means both "based on only" and "based on at least".

Any reference to elements using, for example, names "first" and "second" used in the present disclosure does not generally limit the quantity or order of those elements. The names can be used in the present disclosure as methods used to conveniently distinguish two or more elements from each other. Therefore, the reference to the first and second elements does not mean that only two elements are employed or the first element is prior to the second element in a certain form.

In the configuration of each of the above-mentioned apparatuses, the term "means" may be replaced with a "unit", a "circuit", or a "device".

In the present disclosure, in a case in which the terms "include" and "including" and modifications thereof are used, the terms are intended to be inclusive, as is the term "comprising". Further, the term "or" used in the present disclosure is not intended to be an exclusive OR.

A radio frame may be configured by one frame or a plurality of frames in the time domain. One frame or a plurality of frames may also be referred to as subframes in the time domain. The subframe may be configured by one slot or a plurality of slots in the time domain. The subframe may be a fixed time length (for example, 1 ms) that does not depend on numerology.

The numerology may be a communication parameter that is applied to at least one of the transmission and reception of a certain signal or channel. The numerology may indicate, for example, at least one of a subcarrier spacing (SCS), a bandwidth, a symbol length, a cyclic prefix length, a transmission time interval (TTI), the number of symbols per TTI, the configuration of radio frame, a specific filtering process performed by a transceiver in the frequency domain, and a specific windowing process performed by the transceiver in the time domain.

The slot may also be configured by one symbol or a plurality of symbols (for example, orthogonal frequency division multiplexing (OFDM) symbols or single carrier frequency division multiple access (SC-FDMA) symbols) in the time domain. The slot may be a time unit based on the numerology.

The slot may include a plurality of minislots. Each minislot may be configured by one symbol or a plurality of symbols in the time domain. In addition, the minislot may be referred to as a sub-slot. The minislot may be configured by symbols whose number is less than the number of slots. PDSCH (or PUSCH) that is transmitted in a time unit larger than the minislot may be referred to as a PDSCH (or PUSCH) mapping type A. The PDSCH (or PUSCH) transmitted using the minislot may be referred to as a PDSCH (or PUSCH) mapping type B.

Each of the radio frame, the subframe, the slot, the minislot, and the symbol indicates a time unit when a signal is transmitted. For each of the radio frame, the subframe, the slot, the minislot, and the symbol may be called different names corresponding thereto.

For example, one subframe may also be referred to as a transmission time interval (TTI), a plurality of consecutive subframes may also be referred to as a TTI, or one slot or one minislot may also be referred to as a TTI. That is, at least one of the subframe and the TTI may be a subframe (1 ms) in the existing LTE, a period (for example, 1 to 13 symbols) shorter than 1 ms, or a period longer than 1 ms. In addition, the unit indicating the TTI is not referred to as the subframe, but may be referred to as, for example, a slot or minislot.

Here, the TTI means, for example, a minimum time unit of scheduling in wireless communication. For example, in the LTE system, a base station performs scheduling to allocate radio resources (for example, frequency bandwidths and transmission power which can be used by each data management apparatus 20) to a mobile station in the TTI unit. The definition of the TTI is not limited thereto.

The TTI may be the transmission time unit of, for example, a channel-encoded data packet (transport block), a code block, or a code word or may be the processing unit of, for example, scheduling or link adaptation. In addition, the number of slots (the number of minislots) forming the minimum time unit of scheduling may be controlled. When the TTI is assigned, a time interval (for example, the number of symbols) in which a transport block, a code block, a code word, or the like is actually mapped may be shorter than the TTI.

In a case in which one slot or one minislot is referred to as a TTI, one or more TTIs (that, one or more slots or one or more minislots) may be the minimum time unit of scheduling. In addition, the number of slots (the number of minislots) forming the minimum time unit of scheduling may be controlled.

A TTI having a time duration of 1 ms may be referred to as, for example, a general TTI (TTI in LTE Rel. 8-12), a normal TTI, a long TTI, a general subframe, a normal subframe, a long subframe, or a slot. A TTI that is shorter than the general TTI may be referred to as, for example, a shortened TTI, a short TTI, a partial TTI or a fractional TTI, a shortened subframe, a short subframe, a minislot, a subslot, or a slot.

The long TTI (for example, a general TTI or a subframe) may be replaced with a TTI having a time duration greater than 1 ms and the short TTI (for example, a shortened TTI) may be replaced with a TTI having a TTI duration that is shorter than the TTI duration of the long TTI and is equal to or greater than 1 ms.

A resource block (RB) is the unit of resource allocation in the time domain and the frequency domain and may include one subcarrier or a plurality of consecutive subcarriers in the frequency domain. The number of subcarriers included in the RB may be the same regardless of the numerology and may be, for example, 12. The number of subcarriers included in the RB may be determined on the basis of the numerology.

The time domain of the RB may include one symbol or a plurality of symbols and may be the length of one slot, one minislot, one subframe, or one TTI. For example, each of one TTI and one subframe may be configured by one resource block or a plurality of resource blocks.

One RB or a plurality of RBs may be referred to as, for example, a physical resource block (PRB), a subcarrier group (SCG), a resource element group (REG), a PRB pair, or an RB pair.

Furthermore, the resource block may be configured by one resource element (RE) or a plurality of REs. For example, one RE may be a radio resource region of one subcarrier and one symbol.

A bandwidth part (BWP) (may be referred to as a partial bandwidth) may indicate a subset of continuous common resource blocks (RBs) for a certain neurology in a certain carrier. Here, the common RB may be specified by an RB index based on a common reference point of the carrier. A PRB may be defined by a BWP and may be numbered within the BWP.

The BWP may include a UL BWP and a DL BWP. One BWP or a plurality of BWPs may be configured in one carrier for the UE.

At least one of the configured BWPs may be active and the UE may not expect to transmit and receive predetermined signals/channels outside the active BWP. In the present disclosure, for example, a "cell" and a "carrier" may be replaced with a "BWP".

For example, the structures of the radio frame, the subframes, the slot, the minislot, and the symbol described above are only examples. For example, configurations, such as to the number of subframes included in the radio frame, the number of slots per subframe or radio frame, the number of minislots included in the slot, the number of symbols and RBs included in the slot or the minislot, the number of subcarriers included in the RB, the number of symbols in the TTI, a symbol duration, the length of a cyclic prefix (CP), can be changed in various manners.

In the present disclosure, for example, in a case in which the articles, such as a, an, and the, in English are added in translation, the present disclosure may include that the nouns that follow these articles are plural.

In the present disclosure, the term "A and B are different" may mean that "A and B are different from each other". The term may also mean that "A and B are different from C". The terms "separated" and "coupled" may be interpreted in the same way as "different".

The aspects/embodiments described in the present disclosure may be independently used, may be combined, or may be switched and used in accordance with execution. In addition, the notification of predetermined information (for example, the notification of "being X") is not limited to being performed explicitly and may be performed implicitly (for example, the notification of the predetermined information is not performed).

In the present disclosure, side link communication is an example of direct communication between terminals.

The present disclosure has been described in detail above. However, it should be apparent to those skilled in the art that the present disclosure is not limited to the embodiments described in the present disclosure. The present disclosure can be embodied as corrected and changed aspects without departing from the scope and spirit of the present disclosure defined by the claims. Therefore, the description of the present disclosure has been made for exemplary description and is not intended to have any restrictive meaning to the present disclosure.

### EXPLANATIONS OF LETTERS OR NUMERALS

- 10: COMMUNICATION MANAGEMENT APPARATUS
- 110: TRANSMITTING UNIT
- 120: RECEIVING UNIT
- 130: CONFIGURATION UNIT
- 140: CONTROL UNIT
- 20: DATA MANAGEMENT APPARATUS
- 210: TRANSMITTING UNIT
- 220: RECEIVING UNIT
- 230: CONFIGURATION UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A communication management apparatus comprising:
a receiving unit that receives an identifier transmitted together with a request for network connection from a user equipment;
a transmitting unit that transmits identification information of the user equipment to a data management apparatus; and
a control unit that selects a predetermined parameter corresponding to the identifier received by the receiving unit as a predetermined parameter corresponding to the network connection from correspondence information between an identifier and a predetermined parameter corresponding to the identification information, the correspondence information being acquired from the data management apparatus.

2. A communication management apparatus comprising:
a receiving unit that receives an identifier transmitted together with a request for network connection from a user equipment;
a transmitting unit that transmits the identifier to a data management apparatus; and
a control unit that determines a predetermined parameter corresponding to the identifier which is acquired from the data management apparatus as a predetermined parameter corresponding to the network connection.

3. A communication management apparatus comprising:
a receiving unit that receives an identifier transmitted together with a request for network connection from a user equipment; and
a control unit that selects a predetermined parameter which corresponds to the identifier received by the receiving unit and is supported by the user equipment as a predetermined parameter corresponding to the network connection from correspondence information between an identifier and a predetermined parameter.

4. The communication management apparatus according to any one of claims 1 to 3,
wherein the identifier is an identifier associated with an application type and the predetermined parameter is network slice selection assistance information.

5. A data management apparatus comprising:
a receiving unit that receives identification information of a user equipment from a communication management apparatus which receives an identifier transmitted together with a request for network connection from the user equipment; and
a transmitting unit that transmits correspondence information between an identifier and a predetermined parameter corresponding to the identification information to the communication management apparatus.

6. A data management apparatus comprising:
a receiving unit that receives an identifier from a communication management apparatus which receives the identifier transmitted together with a request for network connection from a user equipment;
a control unit that acquires a predetermined parameter corresponding to the identifier received by the receiving unit from correspondence information between an identifier and a predetermined parameter; and
a transmitting unit that transmits the predetermined parameter to the communication management apparatus.
